# EUROPEAN PATENT SPECIFICATION

(11) **EP 2 167 436 B1**
(45) Date of publication and mention of the grant of the patent: **16.03.2016**
(21) Application number: 08762267.6
(22) Date of filing: 05.06.2008
(51) Int. Cl.: C03B 23/023, C03B 23/03, B32B 17/10

(54) **A METHOD OF PRODUCTION OF A BENT, COATED, LAMINATED GLAZING, AND A RESULTANT GLAZING**
VERFAHREN ZUR HERSTELLUNG EINES GEBOGENEN, BESCHICHTETEN VERBUNDGLASES UND ERHALTENES GLAS
PROCÉDÉ DE PRODUCTION D'UN VITRAGE STRATIFIÉ ENDUIT COURBE ET VITRAGE OBTENU

(30) Priority: 18.06.2007 GB 0711628
(43) Date of publication of application: 31.03.2010
(73) Proprietor: Pilkington Group Limited, Nr. Ormskirk Lancashire L40 5UF (GB); Pilkington Automotive Limited, Hall Lane, Lathom, Nr. Ormskirk Lancashire L40 5UF (GB)
(72) Inventor: BARTON, Neil, St Helens Merseyside WA10 6BJ (GB); TORR, Ashley, Carl, Ormskirk Lancashire L39 6RY (GB)
(74) Representative: Pettet, Nicholas Edward
(86) International application number: PCT/GB2008/001918
(87) International publication number: WO 2008/155516

(56) References cited:
- US-A1- 2004 028 953
- US-B1- 6 387 515
- US-B1- 6 582 799

## Description

The present invention relates to a method of producing a laminated glazing, especially a bent, coated, laminated glazing, and to the resultant glazing. It also relates to a laminated glazing, especially a bent, coated, laminated glazing, independently of its method of production.

A laminated glazing typically comprises at least two plies of glazing material which are joined together by a suitable ply of laminating interlayer material. The ply of interlayer material may be a composite interlayer, in that it may comprise two or more plies of the same or different interlayer material.

It is known to provide a laminated glazing with at least one functional coating, especially when that glazing is destined for the automotive industry. Functional coatings include electrically heatable coatings (to defrost and demist the glazing as required), hydrophobic and hydrophilic coatings (having a "self-cleaning" or air-deodorising effect), coatings which impart a colour (e.g. a reflected colour) to the glazing and solar control coatings (to control the amount of solar heat and/or light transmitted by the glazing) to name a few.

Particularly prevalent in the automotive industry are solar control coatings to reduce the amount of incident solar heat transmitted by a glazing into the passenger compartment of a vehicle. One especially useful solar control coating is a low emissivity coating. The emissivity ε of a particular coating is the ratio of energy radiated by the coating to energy radiated by a black body (which is a perfect radiator having ε = 1) at the same temperature. A low emissivity coating, having ε < 1, is a poor thermal radiator especially of longer wavelength infrared radiation.

US 2004/0028953 A1 discloses a laminated glazing intended for a vehicle, the glazing comprising at least two glass panes united by a thermoplastic interlayer. The glazing is provided with both an anti-sun coating and a low emissivity coating, and the anti-sun coating may be placed on the inner face of the outer glass or on the outer face of the inner glass. The low emissivity coating is preferably on the inner face of the inner glass, i.e. on the surface facing into the driving compartment of the vehicle.

International patent application published with number WO 2005/007592 A1 describes a laminated glazing which has a low emissivity coating on its interior surface, i.e. the exposed surface of the glazing which will face into a vehicle into which the glazing may be fitted. If conventional surface-numbering terminology is used, wherein the surface of the laminate which contacts the environment external to a vehicle is known as surface 1 and the surface which contacts the internal environment is known as surface 4, then the coating is supported on surface 4.

In addition, many automotive glazings may possess some degree of curvature, i.e. they may be bent and shaped. A glazing may have a complex curvature. Complex curvature means that the panes of glazing material have a radius of curvature in two directions which are known as (i) "cross curvature" (curvature along a vertical centreline which extends between the top and bottom edges of the pane (referenced when the glazing is installed in a vehicle)) and (ii) "side-to-side curvature" (curvature along a horizontal centreline which extends between the two side edges of the pane (referenced when the glazing is installed in a vehicle)).

The method used for bending and shaping of laminated vehicle glazings traditionally falls into one of two broad categories: gravity bending (also known as sag bending) or press bending, although there are methods which may be described as hybrids of the two.

With a gravity bending method, first and second glazing plies usually having the same surface area may be paired together in register with one another to form a duplet. An inert interleavant material may be distributed between the plies to prevent them from sticking together once they are heated and have become "tacky". The duplet may be placed on a mould, which may then be transferred to a heating apparatus (typically a radiant and/or convective heating furnace) to heat the plies of glazing material to their softening temperature (the temperature at which they may deform and be bent and shaped). Heat may be supplied to the duplet from above and/or below it (i.e. in a direction perpendicular to the major surfaces of the plies of glazing material). As the softening temperature is approached and reached, the duplet may sag under the influence of gravity to the desired shape.

With a press bending method, first and second glazing plies usually having the same surface area may be separately transferred to a heating apparatus (typically a radiant and/or convective heating furnace); the first and second plies may be consecutively conveyed on rollers or the like (which may themselves possess curvature) into and through the heating apparatus to heat them to their softening temperature. Each of the plies may then be sequentially conveyed onto a ring mould, on which it may begin to sag, before being pressed against a surface mould to achieve the desired shape.

For each method, once the plies of glazing material have been bent and shaped to the desired shape, they may be removed from their respective moulds and cooled so as to fix the imparted shape (subject to shape-relaxation tolerances). A ply of glazing material may be gradually cooled, i.e. annealed, or quickly cooled, i.e. quenched, with the latter providing a toughened or semi-toughened ply.

When either a gravity bending method or a press bending method is employed to bend the plies of glazing material for a laminated glazing, the shape of both the first and second plies is subject to quite strict tolerances. This is because a ply of interlayer material has a substantially uniform thickness, and so to prevent bubbles from appearing in a resultant laminate and to prevent de-lamination, the plies must fit together snugly. As a result, when the first and second plies are paired together about a ply of interlayer material (i.e. one ply adjacent each surface of the ply of interlayer material), the deviation from the desired shape in terms of the radii of curvature of the glazing typically may not exceed ± 0.4 mm for each ply (a total deviation of ± 0.8 mm for the two plies together).

There are numerous factors which may affect the shape of a ply of glazing material achieved from a bending process, including the composition of the material, the thickness of the ply, the presence or absence of a coating on the ply, and the like. In the case of a laminate having a low emissivity coating on surface 4, specific difficulties may be encountered when either a gravity bending or press being method is chosen to bend and shape the plies of glazing material.

With gravity bending, there are three possibilities for heating the duplet, each of which has its disadvantages:
(i) from below only - this must be done gradually so as not to overheat the bottom ply, which means that heating takes a longer time, is more costly and there is little control over the final shape achieved;
(ii) from above only - this is not really feasible because too great a proportion of the incident heat is merely reflected away by the coating, which is typically on the top surface of the duplet to avoid contact with the underlying mould;
(iii) from above and below - if equal heating is supplied, then the coated ply takes much longer to heat because of the heat that is reflected away by the coating, however if more heat is supplied to the coated ply to compensate, this may lead to breakage of the coated ply and decomposition of the coating.

With press bending, both plies are subjected to the same heating regime and conveyance speeds as the first follows the second through the furnace to be pressed. Because the low emissivity coating on the coated ply reflects heat away, the coated ply is heated to a lower temperature (up to 10 °C lower) than the uncoated ply at the stage where each is ready to be press bent. This temperature differential means that although pressed against the same mould, the first and second glazing plies will have slightly different shapes. Unfortunately this shape difference is often enough for the two plies to be outside the permitted tolerance for radii of curvature, meaning that they cannot be paired to form a laminate. Even if it were possible to heat the two plies to substantially the same temperature for press bending, the presence of a low emissivity coating on one of the plies may furthermore affect the relaxation characteristics of that ply, meaning that the resultant shape of the plies will still be unacceptable.

A solution to the problems encountered in providing a bent, laminated glazing having a coating on one of its plies is described in EP 1 200 255 A1. A method of producing the laminate, in which different techniques and parameters (based on a known press bending method) are used to heat and shape first (coated) blanks and second (uncoated) blanks, is described. The coated first blank is heated by supplying heat principally, if not totally, toward its uncoated side, whilst the second uncoated blank is heated by supplying heat toward both sides of it. The first and second blanks may then be shaped, e.g. by different shaping surfaces, such that the concave surface of the resultant glazing has a smaller radius of curvature than the convex surface. Unfortunately, with such a method, apart from an increase in the number of steps required to create a laminate, meaning that the method is made more complicated and time consuming, a problem still exists with the final shapes of the uncoated and coated blanks because of the different shape-relaxation characteristics of each. The consequence is that a coated and uncoated blank produced by this method cannot be laminated together, or at least not without significant yield losses.

It is therefore an object of the present invention to provide a method of producing a bent, coated, laminated glazing, the plies of which can be easily bent and shaped, in readiness for pairing to form a laminate in high yield (greater than around 90 %) and which does not suffer from the problems of the prior art.

Accordingly, the present invention provides a method of producing a bent, coated, laminated glazing comprising the steps of:
- providing a coating on a surface of each of first and second plies of glazing material;
- heating and bending each of the coated plies;
- pairing the bent, coated plies about a ply of interlayer material to form a composite such that the coated surface of the first bent ply and the uncoated surface of the second bent ply are adjacent to the interlayer ply; and
- subjecting the composite to heat and pressure to laminate the glazing plies together, characterised by the coatings on each of the first and second plies of glazing material being identical;
   during bending, causing each of the coated plies to bend in one or more directions such that complementary shapes are achieved to enable subsequent pairing of the plies to form a laminate; and
   cooling each of the bent, coated plies so as to fix their bent shapes.
Provision of a coating on each of the first and second plies means that both plies are processable through a traditional bending apparatus, without the need for any modification. Furthermore, laminates may be easily produced using this method in a high yield. Although there is an increased cost associated with providing a second ply of glazing material with a coating, the ease with which both plies may be bent and the high yields obtainable both easily outweigh this additional cost.

Preferably, the coated plies are caused to bend by pressing each against a mould. Further preferably the coated plies are sequentially pressed against the same mould, i.e. the plies are conveyed singularly to the mould. However, there may be two or more identical moulds in operation to which the plies may be alternatively conveyed. Once pressed, each of the coated plies should have had substantially the same shape imparted to it by the mould, and each should relax in substantially the same manner, thus providing the method of the invention with all-important reproducibility.

The coating provided on the plies of glazing material may be a solar control coating. As mentioned above, such coatings are becoming increasingly popular in at least the automotive industry. Advantageously, the coating may be a low emissivity coating. To achieve optimum benefit from the method of the invention, the coating is preferably substantially identical in terms of its composition and thickness on each of the first and second plies.

The low emissivity coating used will normally be such that when used on 3 mm clear float glass, the coated glass has an emissivity in the range from 0.05 to 0.45; the actual value being measured according to EN 12898 (a published standard of the European Association of Flat Glass Manufacturers) - coatings (when used on 3 mm clear float glass) resulting in an emissivity less than 0.3 are preferred. Low emissivity coatings may be provided as one of two principal types: "hard" or "pyrolytic" coatings and "soft" or "sputtered" coatings. Hard coatings generally have emissivities greater than 0.15 (and preferably less than 0.2), whilst soft coatings generally have emissivities greater than 0.05 (and preferably less than 0.1).

A hard (or pyrolytic) low emissivity coating may comprise a single layer of metal oxide, which is preferably a transparent conductive oxide. Oxides of metals such as tin, zinc, indium, tungsten and molybdenum may be comprised in the single layer of metal oxide. Usually the coating further comprises a dopant, for example fluorine, chlorine, antimony, tin, aluminium, tantalum, niobium, indium or gallium, so that coatings such as fluorine-doped tin oxide and tin-doped indium oxide may result. When the plies of glazing material are panes of glass (discussed in more detail below) such coatings are typically provided with an underlayer e.g. comprising a silicon oxide or silicon oxynitride which serves either as a barrier to control migration of alkali metal ions from the glass and/or as a colour suppressing layer to suppress iridescent reflection colours resulting from variations in thickness of the low emissivity layer.

Soft low emissivity coatings typically comprise a multilayer coating stack which normally includes a metal layer (or a conductive metal compound) and at least one dielectric layer. The multilayer stack structure may be repeated to further enhance the emissivity of the coating. Amongst other similar metals, silver, gold, copper, nickel and chromium may be used as the metal layer in a multilayer stack; indium oxide, antimony oxide or the like may be used as the conductive metal compound. Coatings comprising one or two layers of silver interleaved between layers of a dielectric such as an oxide of silicon, aluminium, titanium, vanadium, tin or zinc are typical multilayer stacks.

A number of low emissivity coatings are known in the art, any of which may be used in accordance with the present invention.

Once the first and second bent plies have been paired to form a laminate, it is preferred that the resultant bent, coated, laminated glazing has one of the coatings on its outermost concave surface, i.e. surface 4. In this case, the other coating will be within the laminate itself on surface 2. In such a position, the surface 2 coating no longer functions as a low emissivity coating, however its presence within the laminate does not adversely affect the performance of the glazing. This arrangement is useful for example when the glazing is to be installed in a vehicle because the "active" surface 4 coating may reduce the amount of unwanted solar heat entering the passenger compartment of the vehicle during hotter weather and reduce the amount of heat generated within the passenger compartment from escaping during colder weather. Although the surface 2 coating is effectively "inactive", its role is fulfilled in that it enables easy, high yield processing of a pair of coated plies.

Turning to the nature of the plies of glazing material, they may be panes of glass, preferably soda-lime-silica glass, which may be clear or body-tinted. The composition of the latter may include one or more of the following colourants: iron oxide, cobalt oxide, selenium, chromium oxide, titanium oxide, manganese oxide, copper oxide, vanadium oxide, nickel oxide. The tint may be such that the glass absorbs an amount of infrared radiation, providing the glazing with further solar control. Alternatively the panes of glazing material may be panes of a rigid plastics material such as polycarbonate. Typically the plies of glazing material are used in a thickness between 0.5 and 10 mm, preferably between 1 and 5 mm. Advantageously both the first and second plies of glazing material are of the same, or substantially the same, thickness.

The ply of interlayer material may be a flexible plastics material, which may be clear or body-tinted. Furthermore it may be infrared absorbing or reflecting (thereby contributing an element of solar control). Suitable interlayer materials include polyvinyl chloride (PVC), polyurethane (PU), ethyl vinyl acetate (EVA), polyethylene terephthalate (PET) or polyvinyl butyral (PVB), the most common choice for lamination being PVB. The ply of interlayer material is typically provided in a thickness of between 0.38 and 1.1 mm, but most commonly 0.76 mm. The overall thickness of the resultant laminated glazing may therefore be between 1.5 and 25 mm, preferably between 2 and 20 mm, and further preferably between 2.5 and 15 mm.

The plies of glazing material may be heated in a furnace, which may be a radiant-heat furnace. In any case, each of the plies of glazing material is preferably heated to a temperature at which its shape may deform. This is known as the "softening temperature" of the particular material from which each ply is made. For a pane of glass, the softening temperature is typically greater than 590 °C.

Once the first and second plies have been heated and shaped, the plies of glazing material may be gradually cooled so as to anneal them. Alternatively, the plies may be quickly cooled, i.e. quenched, so as to toughen or semi-toughen them. Whichever outcome is desired, methods of annealing and toughening or semi-toughening are well known in the art and will not be described in any further detail here.

Subsequent to cooling of the first and second plies, followed by pairing of them about a ply of interlayer material, the resultant composite may be laminated in an autoclave, again as is known in the art.

Further to the method of producing a bent, coated, laminated glazing described above and the bent, coated, laminated glazings that result, the present invention also provides a bent, coated, laminated glazing independently of its method of production. Such a glazing comprises:
first and second bent plies of glazing material joined together by a ply of interlayer material between them,
wherein the first and second plies are of complementary shape, and each of them has an identical coating on one of its surfaces, and the coated surface of the first ply, and the uncoated surface of the second ply, are adjacent to the ply of interlayer material.

The coating provided on the plies of glazing material may be a solar control coating. Advantageously, the coating may be a low emissivity coating. To achieve optimum benefit from the method of the invention, the coating is preferably substantially identical in terms of its composition and thickness on each of the first and second plies. A number of low emissivity coatings are known in the art, as described in detail earlier, any of which may be used in accordance with the present invention.

Preferably the glazing has a coating on its outermost concave surface, i.e. surface 4. In this case, the other coating will be within the laminate itself on surface 2 and will no longer function as a low emissivity coating. However its presence within the laminate will not adversely affect the performance of the glazing, as explained above.

The plies of glazing material may be panes of glass, preferably soda-lime-silica glass, which may be clear or body-tinted. The composition of the latter may include one or more of the following colourants: iron oxide, cobalt oxide, selenium, chromium oxide, titanium oxide, manganese oxide, copper oxide, vanadium oxide, nickel oxide. The tint may be such that the glass absorbs an amount of infrared radiation, providing the glazing with further solar control. Alternatively the panes of glazing material may be panes of a rigid plastics material such as polycarbonate. Typically the plies of glazing material are used in a thickness between 0.5 and 10 mm, preferably between 1 and 5 mm. Advantageously both the first and second plies of glazing material are of the same, or substantially the same, thickness.

The ply of interlayer material may be a flexible plastics material, which may be clear or body-tinted. Furthermore it may be infrared absorbing or reflecting (thereby contributing an element of solar control). Suitable interlayer materials include polyvinylchloride (PVC), polyurethane (PU), ethyl vinyl acetate (EVA), polyethylene terephthalate (PET) or polyvinyl butyral (PVB), the most common choice for lamination being PVB. The ply of interlayer material is typically provided in a thickness of between 0.38 and 1.1 mm, but most commonly 0.76 mm. The overall thickness of the resultant laminated glazing may therefore be between 1.5 and 25 mm, preferably between 2 and 20 mm, and further preferably between 2.5 and 15 mm.

A glazing according to the invention may be used as a vehicle glazing, including as a windscreen, a sidelight (side window glazing), a backlight (rear window glazing) and/or a rooflight (roof window glazing), especially as the latter. When used as a rooflight, the glazing may be provided as a conventional sun-roof glazing, or a glazing that constitutes substantially the entire roof area of a vehicle (sometimes known as "full-area rooflight").

For a better understanding the present invention will now be more particularly described by way of non-limiting example with reference to, and as shown in, the accompanying schematic drawings (not to scale) wherein:
Figure 1 is an overall plan view of a prior art press bending and tempering apparatus which may be used to perform at least a part of the method of the invention;
Figure 2 is a side view, partly in section, of part of the press bending apparatus shown in Figure 1;
Figure 3 is a plan view of a laminated glazing according to the invention, which may or may not be produced according to the method of the invention; and
Figure 4 is a cross section viewed along line B-B of the laminated glazing shown in Figure 3.

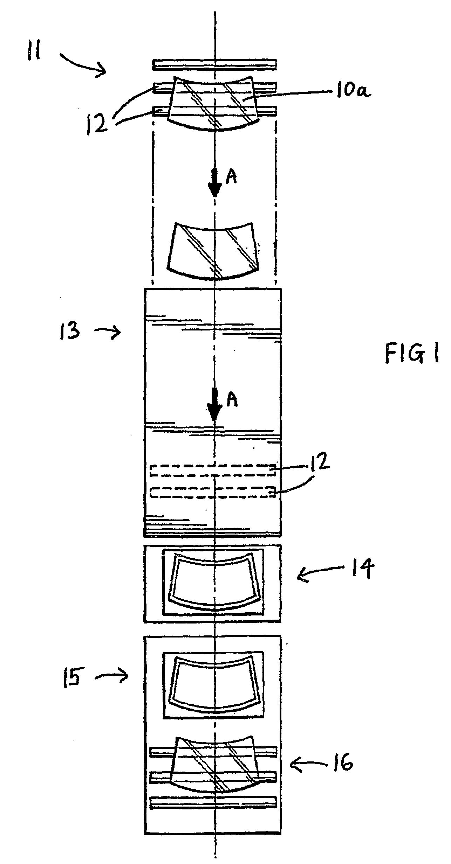

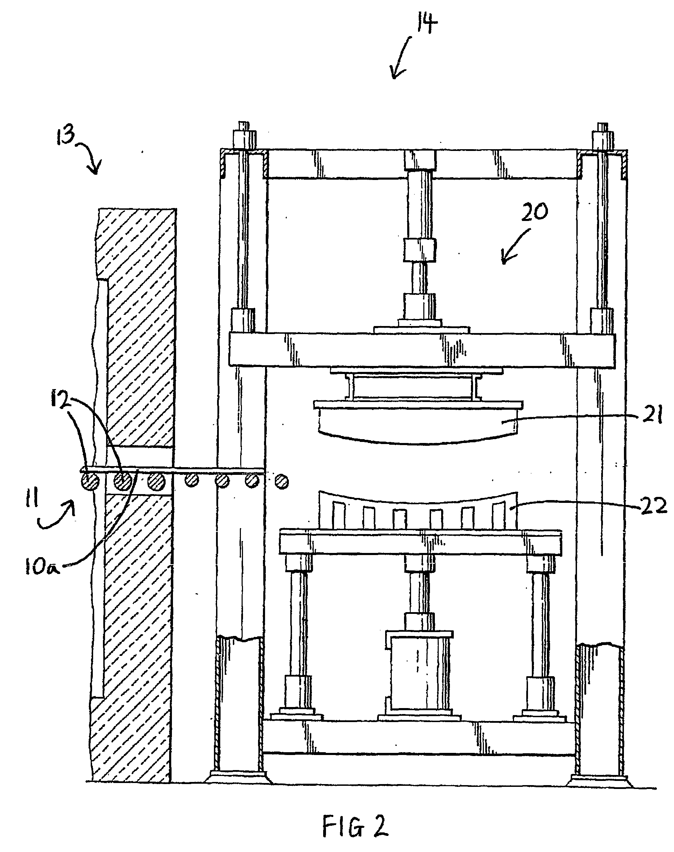

The following description of the method according to the invention is partly with reference to Figures 1 and 2. To produce a bent, coated, laminated glazing the method comprises the following steps:
(i) Manufacture a pane of glass, for example clear soda-lime-silica glass, in a desired thickness, for example 2.3 mm;
(ii) Deposit a low emissivity coating, for example a fluorine-doped tin oxide coating, onto the upper surface of the pane of glass ("upper" being referenced when the pane of glass is laid flat);
(iii) Cut the coated pane of glass to size and shape to form two identical first and second glass plies (10a,10b);
(iv) Transfer the first coated glass ply (10a) onto a conveyor (11), for example comprised of rollers (12), as shown in Figure 1;
(v) Advance the first coated glass ply (10a) into a radiant and convective heating furnace (13) on the conveyor (11) as shown by arrows labelled A in Figure 1 which indicate the overall direction of flow of the method;
(vi) Heat the first coated glass ply (10a) in the furnace (13) to its softening temperature, which is typically greater than around 590 ° C;
(vii) Advance the first coated glass ply (10a) out of the furnace (13) on the conveyor (11) as shown in Figures 1 and 2;
(viii) Transfer the heated first coated glass ply (10a) to a press bending station (14) as shown in Figures 1 and 2;
(ix) Press-bend the heated first coated glass ply (10a) by pressing it against a surface mould (21) and a complementary mould (22) in a press (20) - a typical press bending apparatus known in the art is shown in Figure 2 which has the notable features labelled;
(x) Transfer the bent, heated first coated glass ply (10a) to a quench station (15) as shown in Figure 1 to be quickly cooled ("quenched") to fix its shape (subject to interim shape-relaxation tolerances);
(xi) Unload the cooled, bent first coated glass ply (10a) from the conveyor (11); REPEAT STEPS (iv) TO (xi) FOR THE SECOND COATED GLASS PLY (10b)
(xii) Pair the first and second bent, coated plies (10a, 10b) about a ply of interlayer material, for example PVB (not shown), to form a composite (not shown) such that the coated surface of the first ply and the uncoated surface of the second ply are adjacent to the interlayer ply, and then prepare for autoclaving;
(xiii) Transfer the composite to an autoclave (not shown);
(xiv) Subject the composite to heat and pressure for a predetermined period of time, as is known in the art, to laminate the glass plies and interlayer together;
(xv) Remove the laminated glazing from the autoclave.

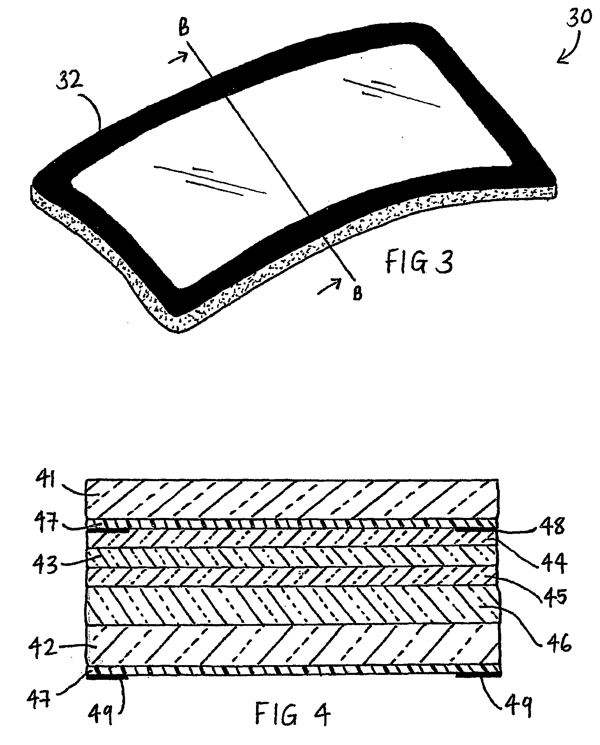

Figure 3 shows a laminated glazing according to the invention, in the form of a roof window 30. Around the periphery of roof window 30 there is an obscuration band 32, which is there to disguise and protect the sealant (not shown) that is used to fix the window into a vehicle (not shown). Obscuration band 32 is made from opaque ink that has been screen printed onto the glazing and subsequently fired. However, it may be composed of and applied using any other known means, or it need not be there at all.

Figure 4 provides more detail about the construction of roof window 30 in that it comprises outer pane of glazing material, in the form of a pane of clear soda-lime-silica glass 41 and inner pane of glazing material, also in the form of a pane of clear soda-lime-silica glass 42. Both outer pane 41 and inner pane 42 are provided with a coating, in the form of a low emissivity coating based on fluorine-doped tin oxide 47, and obscuration prints 48, 49 respectively which form obscuration band 32. Both outer pane 41 and inner pane 42 are 2.3 mm thick.

Roof window 30 further comprises infrared radiation reflecting means, in the form of an infrared reflective interlayer film 43, interleaved between first and second plies of interlayer material, in the form of 0.38 mm thick plies of clear PVB 44, 45 respectively, and a further composite ply of interlayer material 46, in the form of two 0.76 mm thick plies of body-tinted PVB each having a visible light transmission (LT_{A}, measured with CIE Illuminant A) of 18 %, all of which join the plies of the laminate together. Such plies of PVB are currently available from Sekisui Chemical Co. Ltd (www.sekisuichemical.com) and E. I. du Pont de Nemours (www.dupont.com).

Infrared reflective film 43 may be comprised of multiple alternate layers of silver and indium oxide on a ply of PET. Such films are currently available from Southwall Technologies Inc., 3975 East Bayshore Road, Palo Alto, California 9430, USA under the names XIR 70 and XIR 75. Each pane of clear soda-lime-silica glass may have a composition in the range (by weight): SiO₂ 68 - 75 %; Al₂O₃ 0 - 5 %; Na₂O 10 - 18 %; K₂O 0 - 5 %; MgO 0 - 10 %; CaO 5 -15 %; SO₃ 0 - 2 %. The glass may also contain other additives, for example, refining aids, which would normally be present in an amount of up to 2 %.

In the following table Examples 2 and 4 are examples of laminated glazings according to the invention, produced by the method according to the invention. They show the negligible difference made by the presence of a second low emissivity coating on surface 2 (in addition to a low emissivity coating on surface 4) on the performance of each of these glazings. Examples 1 and 3 are comparative, prior art examples of laminated glazings having a low emissivity coating on surface 4 only.

| | Outer ply (mm) | Low E on S2 | Inner ply (mm) | Low E on S4 | XIR film type | LT_{A} (%) | TE (%) | TSHT (%) | Re (%) | a* | b* |
|---|---|---|---|---|---|---|---|---|---|---|---|
| 1. | 2.1 | no | 2.3 | yes | 70 | 2.7 | 2.7 | 14.8 | 23.2 | -3.6 | 2 |
| 2. | 2.3 | yes | 2.3 | yes | 70 | 2.4 | 2.4 | 15.1 | 19.4 | -3.2 | 2.1 |
| 3. | 2.1 | no | 2.3 | yes | 75 | 2.8 | 3.5 | 15.3 | 24.1 | -2.2 | 3.2 |
| 4. | 2.3 | yes | 2.3 | yes | 75 | 2.6 | 3.2 | 15.7 | 19.9 | -2.8 | 3.3 |

Comparing Examples 1 and 2, which incorporate IR reflective film XIR 70, although there is a difference in the thickness of the outer ply of 0.2 mm, which has a *de minimis* effect on the performance of the glazings, it is clear that the presence of an additional low emissivity coating on surface 2 does not adversely affect the performance of the glazing according to the invention in Example 2. Specifically, there is only a difference of 0.3 percentage points in LT_{A}, TE (total energy transmission, measured according to ISO9050 Air Mass 1.5) and TSHT (total solar heat transmission, measured according to ISO9050 Air Mass 1.5). Furthermore, there is only a very slight difference in the colours of the glazings - a* and b* are colour coordinates measured using Illuminant D65 and a 2° observer angle.

Comparison of Examples 3 and 4, which incorporate IR reflective film XIR 75, follows the same pattern. Again despite a difference in thickness of 0.2 mm between the outer plies of each, the presence of an additional low emissivity coating results in a difference of 0.2 percentage points in LT_{A}, TE and TSHT, and only a slight difference in colour.

## Claims

1. A method of producing a bent, coated, laminated glazing (30) comprising the steps of:
- providing a coating (47) on a surface of each of first and second plies of glazing material (10a; 41, 42);
- heating and bending each of the coated plies;
- pairing the bent, coated plies about a ply of interlayer material (44, 45, 46) to form a composite such that the coated surface of the first bent ply and the uncoated surface of the second bent ply are adjacent to the interlayer ply; and
- subjecting the composite to heat and pressure to laminate the glazing plies together,
**characterised by** the coatings (47) on each of the first and second plies of glazing material (10a; 41, 42) being identical;
during bending, causing each of the coated plies to bend in one or more directions such that complementary shapes are achieved to enable subsequent pairing of the plies to form a laminate; and
cooling each of the bent, coated plies so as to fix their bent shapes.

2. A method according to claim 1 wherein the coated plies (10a; 41, 42) are caused to bend by pressing each against a mould (21, 22).

3. A method according to claim 1 or claim 2 wherein the coated plies (10a; 41, 42) are sequentially pressed against the same mould (21, 22).

4. A method according to any of claims 1 to 3 wherein the coating (47) is a solar control coating.

5. A method according to claim 4 wherein the coating (47) is a low emissivity coating.

6. A method according to any preceding claim wherein the resultant bent, coated, laminated glazing (30) has a coating (47) on its outermost concave surface.

7. A method according to any preceding claim wherein the plies of glazing material (10a; 41, 42) are gradually cooled so as to anneal them.

8. A method according to any of claims 1 to 6 wherein the plies of glazing material (10a; 41, 42) are quickly cooled, i.e. quenched, so as to toughen or semi-toughen them.

9. A bent, coated, laminated glazing (30) comprising:
first and second bent plies of glazing material (10a; 41, 42) joined together by a ply of interlayer material (44, 45, 46) between them,
wherein the first and second plies are of complementary shape, and each of them has an identical coating (47) on one of its surfaces, and the coated surface of the first ply, and the uncoated surface of the second ply, are adjacent to the ply of interlayer material.

10. A glazing as claimed in claim 9 wherein the coating (47) is a solar control coating.

11. A glazing as claimed in claim 9 or claim 10 wherein the coating (47) is a low emissivity coating.

12. A glazing as claimed in any of claims 9 to 11 having a coating (47) on its outermost concave surface.

13. A glazing as claimed in any of claims 9 to 12 wherein the ply of interlayer material (44, 45, 46) is a ply of a flexible plastics material such as polyvinyl chloride (PVC), polyurethane (PU), ethyl vinyl acetate (EVA), polyethylene terephthalate (PET) or polyvinyl butyral (PVB).

## Patentansprüche

1. Verfahren zum Herstellen einer gebogenen, beschichteten, laminierten Verglasung (30), das die folgenden Schritte umfasst:
- Bereitstellen einer Beschichtung (47) auf eine Oberfläche sowohl einer ersten Lage als auch einer zweiten Lage aus Verglasungsmaterial (10a, 41, 42);
- Erhitzen und Biegen von jeder der beschichteten Lagen;
- paarweises Zusammenbringen der gebogenen, beschichteten Lagen um eine Lage aus Zwischenschichtmaterial (44, 45, 46), um ein Verbundmaterial zu bilden, bei dem die beschichtete Oberfläche der ersten gebogenen Lage und die nicht beschichtete Oberfläche der zweiten gebogenen Lage zu der Zwischenschichtlage benachbart sind; und
- Einwirkenlassen von Wärme und Druck auf das Verbundmaterial, um die Verglasungslagen miteinander zu laminieren,
**dadurch gekennzeichnet, dass** die Beschichtungen (47) auf der ersten Lage und der zweiten Lage des Verglasungsmaterials (10a, 41, 42) identisch sind;
dass während des Biegens, das dafür sorgt, dass die beschichteten Lagen so in einer oder mehreren Richtungen gebogen werden, dass komplementäre Formen erzielt werden, um das nachfolgende paarweise Zusammenbringen der Lagen unter Bildung eines Laminats zu gewährleisten; und
dass jede der gebogenen, beschichteten Lagen abgekühlt wird, um ihre gebogene Form zu fixieren.

2. Verfahren nach Anspruch 1, wobei die beschichteten Lagen (10a, 41, 42) durch das Pressen gegen eine Form (21, 22) dazu gebracht werden, sich zu verbiegen.

3. Verfahren nach Anspruch 1 oder Anspruch 2, wobei die beschichteten Lagen (10a, 41, 42) nacheinander gegen die gleiche Form (21, 22) gepresst werden.

4. Verfahren nach einem der Ansprüche 1 bis 3, wobei die Beschichtung (47) eine Sonnenschutzbeschichtung ist.

5. Verfahren nach Anspruch 4, wobei die Beschichtung (47) eine Beschichtung mit niedrigem Emissionsvermögen ist.

6. Verfahren nach einem der vorhergehenden Ansprüche, wobei die resultierende gebogene, beschichtete, laminierte Verglasung (30) eine Beschichtung (47) auf ihrer äußersten konkaven Oberfläche aufweist.

7. Verfahren nach einem der vorhergehenden Ansprüche, wobei die Lagen aus Verglasungsmaterial (10a, 41, 42) allmählich abgekühlt werden, um sie zu tempern.

8. Verfahren nach einem der Ansprüche 1 bis 6, wobei die Lagen aus Verglasungsmaterial (10a, 41, 42) schnell abgekühlt, d. h. abgeschreckt, werden, um sie zu vorzuspannen oder teilvorzuspannen.

9. Gebogene, beschichtete, laminierte Verglasung (30), die umfasst:
eine erste gebotene Lage und eine zweite gebogene Lage aus Verglasungsmaterial (10a, 41, 42), die durch eine Lage aus Zwischenschichtmaterial (44, 45, 46) zwischen ihnen miteinander verbunden sind,
wobei die erste Lage und die zweite Lage eine komplementäre Form aufweisen und jede von ihnen eine identische Beschichtung (47) auf einer ihrer Oberflächen aufweist und die beschichtete Oberfläche der ersten Lage und die nicht beschichtete Oberfläche der zweiten Lage benachbart zu der Lage aus Zwischenschichtmaterial sind.

10. Verglasung nach Anspruch 9, wobei die Beschichtung (47) eine Sonnenschutzbeschichtung ist.

11. Verglasung nach Anspruch 9 oder Anspruch 10, wobei die Beschichtung (47) eine Beschichtung mit niedrigem Emissionsvermögen ist.

12. Verglasung nach einem der Ansprüche 9 bis 11, die eine Beschichtung (47) auf ihrer äußersten konkaven Oberfläche aufweist.

13. Verglasung nach einem der Ansprüche 9 bis 12, wobei die Lage aus Zwischenschichtmaterial (44, 45, 46) eine Lage aus einem flexiblen Kunststoffmaterial ist, wie Polyvinylchlorid (PVC), Polyurethan (PU), Ethylvinylacetat (EVA), Polyethylenterephthalat (PET) oder Polyvinylbutyral (PVB).

## Revendications

1. Procédé de production d'un vitrage stratifié, enduit, courbé (30) comprenant les étapes suivantes :
- la fourniture d'un enduit (47) sur une surface de chacune des première et seconde couches de matériau de vitrage (10a ; 41, 42) ;
- le chauffage et le courbement de chacune des couches enduites ;
- l'appariement des couches enduites, courbées autour d'une couche de matériau intermédiaire (44, 45, 46) pour former un composite de sorte que la surface enduite de la première couche courbée et la surface non enduite de la seconde couche courbée soient adjacentes à la couche de matériau intermédiaire ; et
- la soumission du composite à la chaleur et à la pression pour stratifier les couches de vitrage ensemble,
**caractérisé par le fait que** les enduits (47) sur chacune des première et seconde couches de matériau de vitrage (10a ; 41, 42) sont identiques ;
pendant le courbement, l'amenée de chacune des couches enduites à courber dans une ou plusieurs directions de sorte que des formes complémentaires soient atteintes pour permettre l'appariement ultérieur des couches pour former un stratifié ; et
le refroidissement de chacune des couches enduites courbées de sorte à fixer leurs formes courbées.

2. Procédé selon la revendication 1, dans lequel les couches enduites (10a ; 41, 42) sont amenées à courber en les pressant chacune contre un moule (21, 22).

3. Procédé selon la revendication 1 ou la revendication 2, dans lequel les couches enduites (10a ; 41, 42) sont pressées de manière séquentielle contre le même moule (21,22).

4. Procédé selon l'une quelconque des revendications 1 à 3, dans lequel l'enduit (47) est un enduit à contrôle solaire.

5. Procédé selon la revendication 4, dans lequel l'enduit (47) est un enduit à faible émissivité.

6. Procédé selon l'une quelconque des revendications précédentes, dans lequel le vitrage stratifié, enduit, courbé résultant (30) présente un enduit (47) sur sa surface concave extérieure.

7. Procédé selon l'une quelconque des revendications précédentes, dans lequel les couches de matériau de vitrage (10a ; 41, 42) sont progressivement refroidies de sorte à les recuire.

8. Procédé selon l'une quelconque des revendications 1 à 6, dans lequel les couches de matériau de vitrage (10a ; 41, 42) sont rapidement refroidies, c'est-à-dire trempées de sorte à les durcir ou semi-durcir.

9. Vitrage stratifié, enduit, courbé (30) comprenant :
des première et seconde couches courbées de matériau de vitrage (10a ; 41, 42) jointes ensemble par une couche de matériau intermédiaire (44, 45, 46) entre elles,
dans lequel les première et seconde couches sont de formes complémentaires et chacune d'elles a un enduit identique (47) sur l'une de ses surfaces et la surface enduite de la première couche et la surface non enduite de la seconde couche sont adjacentes à la couche de matériau intermédiaire.

10. Vitrage selon la revendication 9, dans lequel l'enduit (47) est un enduit à contrôle solaire.

11. Vitrage selon la revendication 9 ou la revendication 10, dans lequel l'enduit (47) est un enduit à faible émissivité.

12. Vitrage selon l'une quelconque des revendications 9 à 11, présentant un enduit (47) sur sa surface concave extérieure.

13. Vitrage selon l'une quelconque des revendications 9 à 12, dans lequel la couche de matériau intermédiaire (44, 45, 46) est une couche de matériau plastique flexible tel que du chlorure de polyvinyle (PVC), du polyuréthane (PU), d'éthyle-vinyle-acétate (EVA), du téréphtalate de polyéthylène (PET) ou du butyral de polyvinyle (PVB).
